# EUROPEAN PATENT APPLICATION

(11) **EP 2 919 525 A1**
(43) Date of publication of application: **16.09.2015**
(21) Application number: 15158638.5
(22) Date of filing: 11.03.2015
(51) Int. Cl.: H04W 48/06, H04W 76/02, H04W 8/00, H04W 48/12, H04W 48/14

(54) **METHOD AND APPARATUS FOR ALLOCATING DISCOVERY RESOURCE POOLS IN A WIRELESS COMMUNICATION SYSTEM**

(30) Priority: 11.03.2014 US 201461951132 P
(71) Applicant: Innovative Sonic Corporation, Taipei City 11491 (TW)
(72) Inventor: Chen, Wei-Yu, 11491 Taipei City (TW); Pan, Li-Te, 11491 Taipei City (TW); Kuo, Richard Lee-Chee, 11491 Taipei City (TW)
(74) Representative: Hoefer & Partner Patentanwälte mbB

(57) **Abstract**

A method for allocating discovery resource pools is disclosed. The WCN receives a Discovery Request message from a UE and replies with a Discovery Response message that indicates at least a discovery resource pool for the UE to use. In case of dedicated resource pool, the UE sends next a D2D discovery resource request and the WCN replies with a configuration about the dedicated discovery request. The discovery request can include a Prose Application ID (or a subset of it) to identify a service, and the discovery response can include a Prose Application Code or a discovery filter.

## Description

### CROSS-REFERENCE TO RELATED APPLICATIONS

The present Application claims the benefit of U.S. Provisional Patent Application Serial No. 61/951,132 filed on March 11, 2014, the entire disclosure of which is incorporated herein by reference.

### FIELD

This disclosure generally relates to wireless communication networks, and more particularly, to a method and apparatus for allocating discovery resource pools in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

Methods and apparatus for allocating discovery resource pools are disclosed and are defined in independent claims 1, 5 and 15, respectively. The respective dependent claims define preferred embodiments thereof, respectively. The method according to one aspect includes the wireless communication network (WCN) receiving a Discovery Request message from a UE. This method further includes the WCN transmitting a Discovery Response message to the UE, wherein the Discovery Response message includes information to indicate at least a discovery resource pool for the UE to use.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 is a reproduction of Figure 2 of 3GPP R2-140474.
FIG. 6 is a reproduction of Figure 5.3.1-1 of 3GPP S2-140520.
FIG. 7 is a reproduction of Figure 5.3.2.1-1 of 3GPP S2-140520.
FIG. 8 is a reproduction of Figure 5.3.2.3-1 of 3GPP S2-140520.
FIG. 9 is a flow chart according to one exemplary embodiment.
FIG. 10 is a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including RAN1-73 minutes report; R2-134287, "Type 2B resource allocation for D2D discovery", Intel Corporation; RAN2#85 minutes report; R2-140474, "Open Issues of D2D Discovery", Qualcomm Incorporated; R2-140692, "Resource allocation for D2D discovery", ZTE; S2-140520, "Direct discovery procedures", Qualcomm Incorporated; R1-140337, "Resource Allocation and UE Behavior for D2D Discovery", LG Electronics. The standards and documents listed above are hereby expressly incorporated by reference in their entirety.

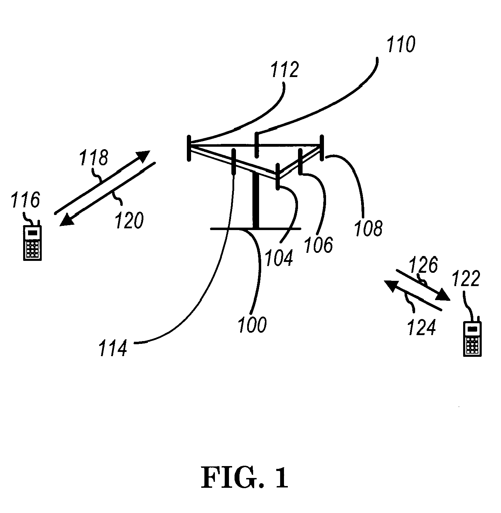

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

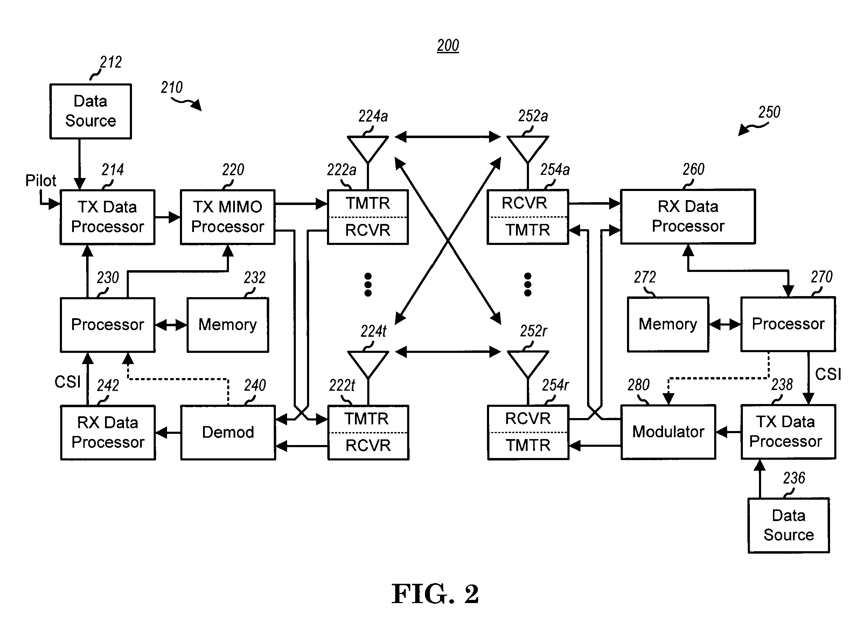

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

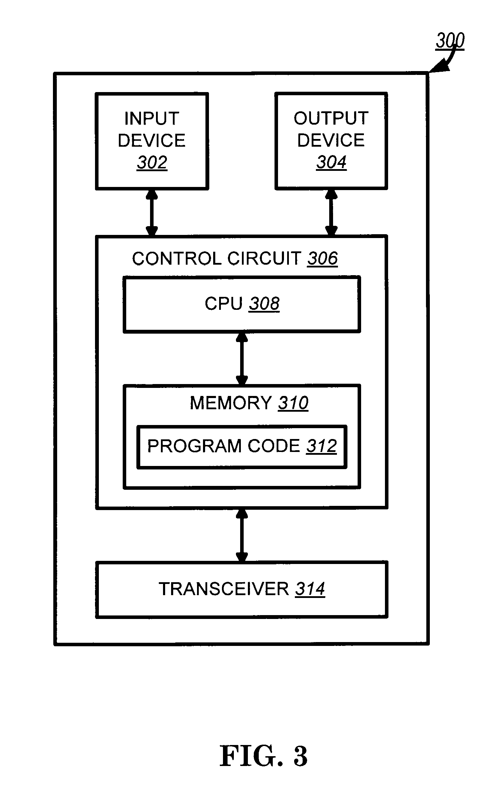

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 can also be utilized for realizing the AN 100 in FIG. 1.

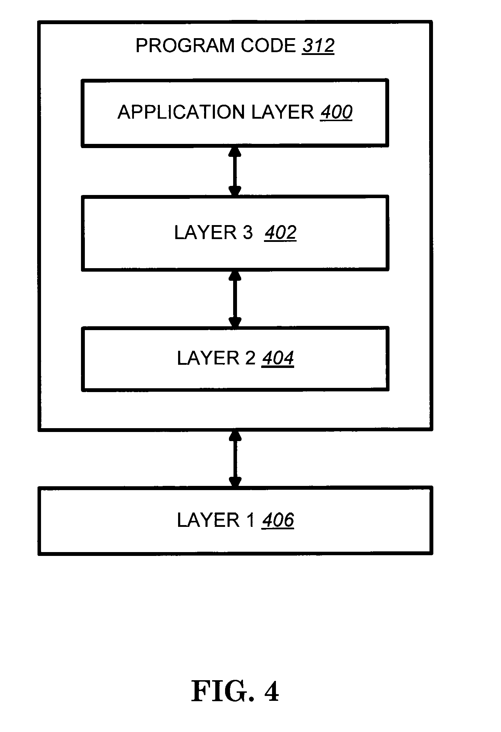

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

For LTE or LTE-A systems, the Layer 2 portion may include a Radio Link Control (RLC) layer and a Medium Access Control (MAC) layer. The Layer 3 portion may include a Radio Resource Control (RRC) layer.

According to 3GPP RAN1-73 minutes report, it was agreed there will be three kinds of resource allocation methods as follows:
Agreement
   At least the following two types of discovery procedure are defined for the purpose of terminology definition for use in further discussions/studies (note that these definitions are intended only to aid clarity and not to limit the scope of the study):
   - Type 1: a discovery procedure where resources for discovery signal transmission are allocated on a non UE specific basis
      o Note: Resources can be for all UEs or group of UEs
   - Type 2: a discovery procedure where resources for discovery signal transmission are allocated on a per UE specific basis
      ▪ Type 2A: Resources are allocated for each specific transmission instance of discovery signals
      ▪ Type 2B: Resources are semi-persistently allocated for discovery signal transmission

In general, Type 1 discovery resource is contention-based resource, while Type 2A and 2B discovery resources are central controlled (or dedicated) resources.

In addition, 3GPP R2-134287 describes some use cases can benefit from type2B resources as follows:

### Advantage of Type 2B resource allocation

There are several cases that we can get benefit by using Type 2B resource allocation.
- RRC_CONNECTED UEs: the signalling overhead for resource allocation is considered as comparable to Type 1 because SPS based scheduling requires only when resource is activated/released. However, the main concern on Type 2B resource allocation is the signalling overhead due to RRC connection management. In Type 2B, the UE needs to establish RRC connection to request UE specific discovery resource and may cause HO procedure if the UE is moving and kept in RRC_CONNECTED mode for discovery operation. However, if the UE happens to be in RRC_CONNECTED mode for normal LTE data service, there is no additional signalling overhead for discovery operation.
- Public safety support: although there is no requirement to prioritize a certain discovery service, it may be good to support the option providing better performance for the case where low latency and high reliability is required for discovery. The main concern of Type 1 resource allocation is collision between the UEs selecting the same discovery resource. Although the collision probability can be controlled and mitigated with various schemes, collision cannot be fully resolved. Especially, in emergency situation in Public safety scenario, collision may be more increased if a lot of UEs tries to perform discovery. In this case, if the eNB can allocate UE specific dedicated resource for discovery, the discovery signal can be detected by other UEs without collision. Consequently, it reduces discovery time and power consumption.
- Stationary UEs: as mentioned in [1], it is expected that some D2D UEs are used for the commercial purpose e.g. stores, restaurants, etc. In this case, these UEs are stationary and thus, are not subject to handover to neighbouring cells. In addition, depending on business model, the discovery of these UEs can be more prioritized. In this case, Type 2B resource allocation is more beneficial than Type 1 because collision-free discovery resource can provide low latency and high reliability without signalling overhead.
Based on the above observations, Type 2B resource allocation provides benefit without increasing signalling overhead significantly. Since RAN2 has agreed that the transmission and reception of discovery signal is supported in RRC_IDLE mode and RRC_CONNECTED mode, Type 1 should be baseline as proposed in [2]. However, on top of Type 1, Type 2B should be supported considering the useful cases identified above.

### Proposal 1: RAN2 is asked to support Type 2B resource allocation method for D2D discovery in addition to Type 1.

Furthermore, 3GPP RAN2#85 minutes report addresses some agreements on D2D discovery service as follows:

| **Agreements** | |
|---|---|
| For in-coverage discovery... | |
| 1 | the eNB may provide in SIB ... |
| | a) a radio resource pool for discovery reception of Type 2B |
| | b) a radio resource pool for discovery transmission and reception in case of Type 1 (FFS for inter-cell discovery) |
| 2 | In case of Type 1, a UE autonomously selects radio resources from that indicated transmissions resource pool for discovery signal transmission. |
| ... | |
| 3 | In case of Type 2B, only an RRC Connected UE may request resources for transmission of D2D discovery messages from the eNB via RRC and the eNB assigns these resource via RRC. As baseline, UE releases the transmission resources the latest when the UE enters IDLE or when the eNB withdraws the resource by RRC signalling. |
| 6 | Receiving UEs monitor both Type 1 and Type 2B discovery resources |
| ... | |

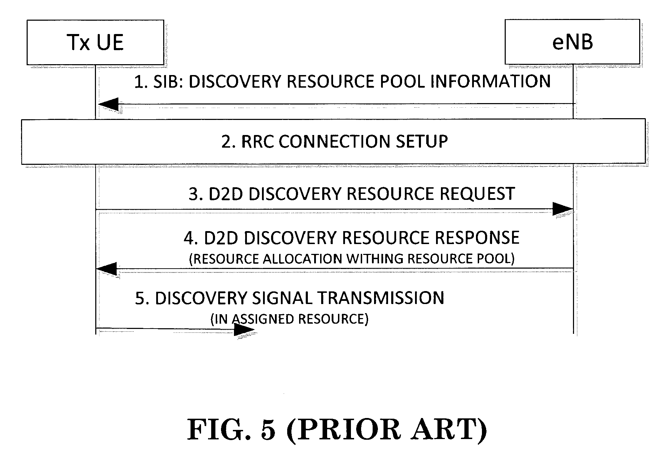

Specifically, 3GPP R2-140474 proposes using D2D discovery resource request/response messages to request and allocate Type 2 discovery resource in Figure 2 entitled "D2D Resource request and response message for Type 2", which has been reproduced as FIG. 5.

3GPP R2-140692 further recommends the following:
**Proposal 3:** It is recommended that Type 1 procedure is used for IDLE state UEs while Type 2 procedure is applied for CONNECTED state UEs.

In addition, 3GPP S2-140520 defines ProSe Application ID and ProSe Application Code for use in discovery as follows:

### 4.6.2 Identifiers for direct discovery

### 4.6.2.1 ProSe Application ID

The ProSe Application ID is an identity used for direct discovery, identifying application related information for the ProSe enabled UE. Each ProSe Application ID is globally unique and unambiguously identifies a service across the 3GPP PLMNs.

For open discovery, the ProSe Application ID is called Public ProSe Application ID. The Public ProSe Application ID can be PLMN-specific or country specific or global.

Each Public ProSe Application ID is composed of the following parts:
a. ProSe Application ID Name is described in its entirety by a data structure that could be a tree data structure characterized by different levels e.g., broad-level business category (Level0) / business sub-category (Level1) / business name (Level2) / shop ID (Level3). For the purpose of presentation, a ProSe Application ID Name is usually displayed as a string of labels in which the labels represent hierarchical levels.
b. ProSe Application ID Operator Identifier that corresponds to the PLMN id that assigned the ProSe Application ID Name
   NOTE: If the public ProSe Application ID is country specific then the Mobile Network Code (MNC) of the ProSe Application ID Operator Identifier is wild carded. If global, both the MCC and MNC are wild carded.

In case of open discovery:
- when the "announcing" UE wants to indicate to the ProSe Function what is interested to announce, in order to be assigned a ProSe Application Code it contains in the discovery request a Public ProSe Application ID that indicates its interest
- when the "monitoring" UE wants to indicate to the ProSe Function what to monitor, it contains in the discovery request the full or a subset of the public ProSe Application ID e.g. it can contain 2 out of the n levels of the full Public ProSe Application ID
NOTE: The ProSe Application ID Name tree data structure is not expected to change often.

### 4.6.2.2 ProSe Application Code

The ProSe Application Code is contained in the message that is actually transmitted "over the air" (on PC5) by a UE engaged in the ProSe direct discovery procedure.

Each ProSe Application Code is composed of the following parts:
a. A temporary identity that corresponds to the ProSe Application ID Name. Given the tree structure associated with public ProSe Application ID, each is associated with a different temporary identity that is built appending a new piece of identifier (specific to that node) to the identifier inherited by the predecessor node: this allows partial matching at the UE side using a mask, making more effective and flexible the filtering of the received temporary identity in a monitoring UE.
b. The PLMN id that assigned the ProSe Code, i.e. Mobile Country Code (MCC) and Mobile Network Code (MNC)
c. The ProSe Function Identifier of the Prose Function that has assigned the ProSe Code.
Editor's Note: The need for ProSe Function Identifier as part of the ProSe Application Code is FFS.
NOTE: In this release of the specification the ProSe Application Code is always assigned by a ProSe Function in HPLMN.

A ProSe Application Code is allocated per "announcing" UE and per application and has an associated validity timer that runs both in the ProSe Function and in the UE.

The ProSe Function may decide at any time to replace a previously allocated ProSe Application Code providing the UE with a new ProSe Application Code, where the temporary UE specific identifier is changed. Replacing a ProSe Code resets the corresponding validity timer both in the ProSe Function and in the UE.

Editor's Note: Each sub-section specifies a new identifier required for ProSe.

Also, 3GPP S2-140520 specifies the procedures for D2D discovery as follows:

### 5.3.1 Overall procedure for direct discovery

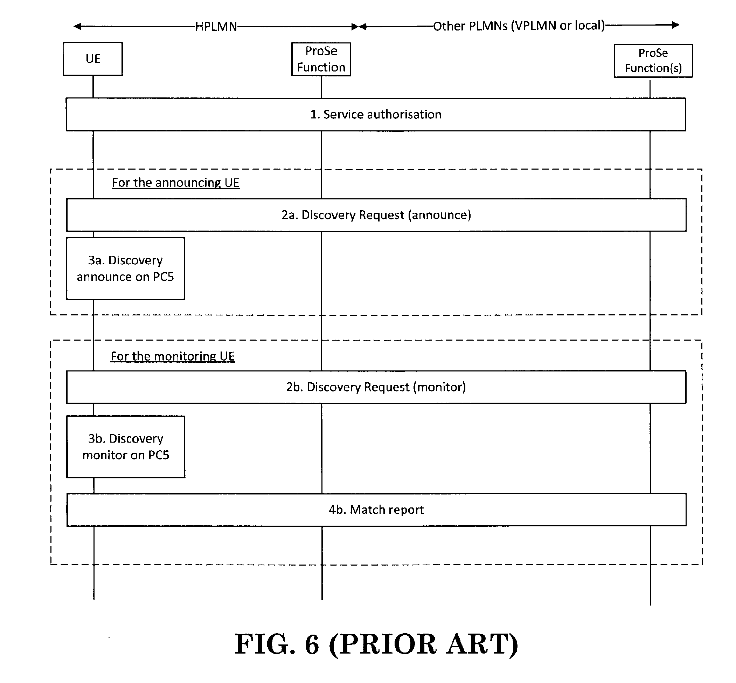

[Figure 5.3.1-1 of 3GPP S2-140520 has been reproduced as FIG. 6]
1. Service authorisation for ProSe direct services is performed for direct discovery as defined in clause 5.2, and 4.5.1.
   If the UE is authorised to announce:
2a. When the UE is triggered to announce then it sends a discovery request for announcing to the ProSe Function in HPLMN as defined in clauses 5.3.2.1 and 5.3.2.2.
3a. If the request is successful and is provided with ProSe Application Code then it starts announcing on PC5 interface.
   NOTE : More details on the Access Stratum protocol of this step are provided in RAN specifications.
   If the UE is authorised to monitor:
2b. When the UE is triggered to monitor, it sends a discovery request for monitoring to the ProSe Function as defined in clauses 5.3.2.3 and 5.3.2.4.
3b. If the request is successful and the UE is provided with a Discovery Filter consisting of ProSe Application Code(s) or mask(s) starts monitoring for ProSe Application Codes on PC5 interface.
   NOTE: More details on the Access Stratum protocol of this step are provided in RAN specifications.
4b. When the UE detects that one or more ProSe Application Code(s) that match the filter, it reports the ProSe Application Code(s) to the ProSe Function as defined in clause 5.3.3.

### 5.3.2.1 Announce request (non-roaming)

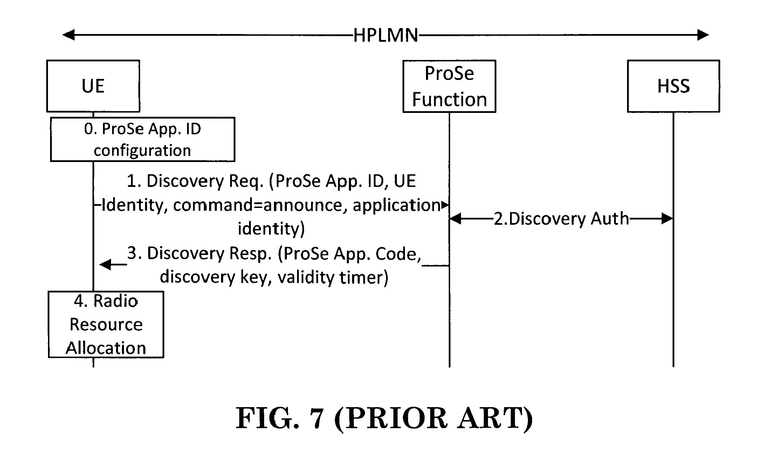

[Figure 5.3.2.1-1 of 3GPP S2-140520 has been reproduced as FIG. 7]
0. The UE is configured with offline mechanisms with the tree data structure of the ProSe Application IDs corresponding to HPLMN. This step is performed using mechanisms out of scope of 3GPP.
1. If the UE is authorised to announce in HPLMN and is triggered to announce, it shall establish a secure connection and it shall send a Discovery Request (ProSe Application ID, UE Identity, announce command, application identity) message for announcing. The ProSe Application ID indicates what the UE is interested to announce. The UE Identity identifies the UE subscription and can be the e.g. IMSI or MSISDN. The application identity represents a unique identifier of the UE application that has triggered the Discovery Request. This request is always sent to the ProSe Function in HPLMN.
   NOTE: The application identity uniquely identifies the application itself. All common mobile operating systems have namespaces that identify the applications within this operating system.
   Editor's Note: It is up to stage-3 to determine whether for the application identity the operating specific identity would suffice or a namespace needs to be defined by 3GPP that will be common across all operating systems.
   Editor's Note: The mechanism to establish a secure connection between the UE and the ProSe Function will be defined by SA WG3.
2. If there is no associated UE context, the ProSe Function shall check with HSS the authorisation for discovery and create a new context for this UE that contains the subscription parameters for this UE.
3. If the Discovery Request is authorised, then the ProSe Function shall respond with a Discovery Response (ProSe Application Code, validity timer) message. ProSe Application Code is provided by the ProSe Function and corresponds to the ProSe Application ID that was contained in the Discovery Request. The validity timer indicates for how long this ProSe Application Code is going to be valid. The UE will be authorised to announce this ProSe Application Code for the duration of validity timer and if it does not change its registered or equivalent PLMN. When the validity timer expires or the UE changes its registered or equivalent PLMN the UE may need to request a new ProSe Application Code.
4. The UE may start announcing the provided ProSe Application Code in HPLMN, using the radio resources authorised and configured by E-UTRAN to be used for ProSe.
   Editor's Note: The mechanism to protect the discovery message will be defined by SA WG3.
   Editor's Note: The correct representation of radio resource allocation from E-UTRAN needs to be revised.
   ...

### 5.3.2.3 Monitor request (non-roaming)

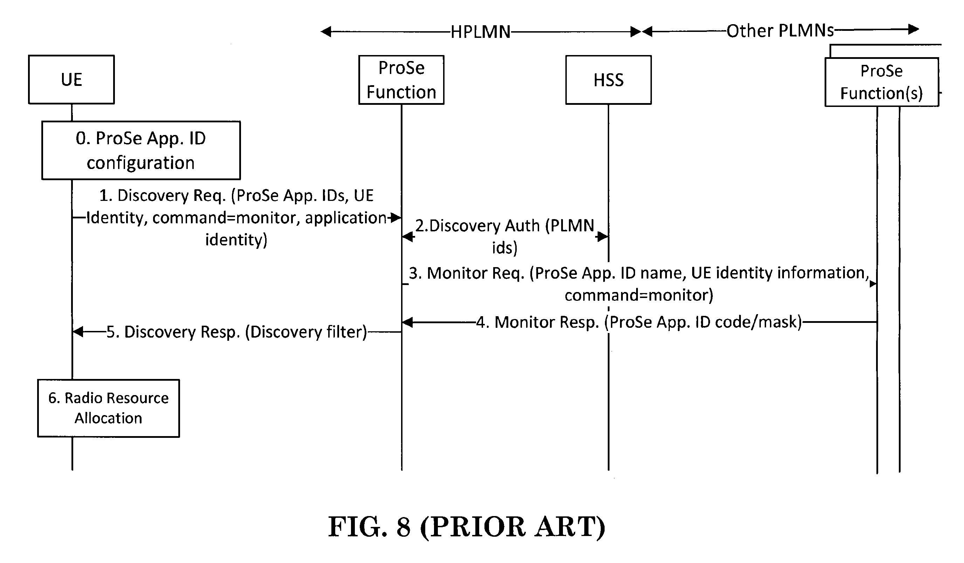

[Figure 5.3.2.3-1 of 3GPP S2-140520 has been reproduced as FIG. 8]
0. The UE is configured using offline mechanisms with the tree data structure of the ProSe Application IDs corresponding to PLMNs the UE is authorised to monitor. This step is performed using mechanisms out of scope of 3GPP.
1. If the UE is authorised to monitor in at least one PLMN and is interested to monitor certain ProSe Application ID(s), it shall establish a secure connection and shall send a Discovery Request (ProSe Application ID(s), UE Identity, monitor command, application identity) message for monitoring. The ProSe Application ID(s) indicate what the UE is interested to monitor and they consist a subset of the tree data structure of the PLMN. The UE Identity identifies the UE subscription and can be the e.g. IMSI or MSISDN. The application identity represents a unique identifier of the application that has triggered the discovery request. This request is always sent to the ProSe Function in HPLMN.
   NOTE 1: The application identity uniquely identifies the application itself. All common mobile operating systems have namespaces that identify the applications within this operating system.
   Editor's Note: It is up to stage-3 to determine whether for the application identity the operating specific identity would suffice or a namespace needs to be defined by 3GPP that will be common across all operating systems.
   Editor's Note: The mechanism to establish a secure connection between the UE and the ProSe Function will be defined by SA WG3.
2. If there is no associated UE context, the ProSe Function shall check with HSS the authorisation for discovery and create a new context for this UE that contains the subscription parameters for this UE. The authorisation information also contains the PLMNs that this UE is allowed to perform discovery.
   If the Discovery Request is authorised and the ProSe Application ID sent by the UE in step 1 indicates another local PLMN in the same country then steps 3-6 are executed, otherwise steps 5-6 only:
3. The ProSe Function in HPLMN shall contact other local PLMNs in the same country in order to resolve the ProSe Application ID Name(s) to mask(s) that corresponds to this ProSe Application ID Name. The request shall also include the UE identity information e.g. IMSI or MSISDN in order to allow the ProSe Function in local PLMN to perform charging.
4. The ProSe Function of the local PLMN returns the related mask(s) and the corresponding TTL for each.
5. The ProSe Function in the HPLMN shall respond with a Discovery Response (Discovery Filter(s), Filter id) message. The Discovery Filter(s) consists of the ProSe Application mask(s). The Discovery Filter(s) include the TTL(s). The TTL(s) in the Discovery Filter(s) indicates for how long the Discovery Filter(s) is going to be valid.
   NOTE 2: The UE can randomize the request for assignment of new Discovery Filter in order to guard against a peak of Discovery Requests when the TTL expires.
6. The UE may start monitoring using the Discovery Filter(s) in the radio resources that are authorized and configured by the PLMN(s)to be used for ProSe.
   Editor's Note: The correct representation of radio resource allocation from E-UTRAN needs to be revised.

U.S. Provisional Patent Application Serial No. 61/731,712 discloses a concept of separate sets of discovery resources for different use cases; and transmitting and receiving UEs may determine which set of resources to transmit/receive discovery signaling based on user's setting. U.S. Provisional Patent Application Serial No. 61/731,712 is hereby incorporated by reference in its entirety.

In addition, 3GPP R1-140337 discusses whether the type 2 resource allocation information should be delivered to the receiver UEs as follows:

### 3.2. Type 2 discovery

[...]

The potential drawback of Type 2B discovery is that it requires more signaling overhead and UE power consumption because a UE needs to be in the RRC_Connected state to be provided with the per-UE resource configuration from the network. However, it is possible to apply Type 2B discovery in RRC_Idle state depending on the details of high layer procedure; network provides discovery resource in RRC_Connected state and the UE applies the provided resource in RRC_Idle state [2]. In this case, the system can take advantage of the power and signal efficiency of RRC_Idle mode while exploiting the collision-free nature of Type 2B discovery.

Triggering Type 2A discovery can be similar to the aperiodic SRS mechanism, but its usefulness needs to be considered further in consideration of the required signaling overhead.

One consideration point in Type 2 discovery is whether the resource allocation information is delivered to the receiver UEs. If delivered, the receiver UE can limit the discovery message search so that the false detection probability is reduced and UE battery can be saved. If higher layer signaling is used for this purpose, it can be interpreted as the indication of the candidates for Type 2 discovery signal transmissions. If physical layer signaling is used, it can be interpreted as the indication of the actual Type 2 discovery signal transmissions. If no information is delivered to the receiver UEs, the reception procedure will be the same as that in Type 1 discovery case.

Type 1 resource pool could be considered a common resource pool because the pool is shared by all UEs. Type 2B resource pool is a type of dedicated resource pool because the resources are allocated by the eNB for specific UEs.

For a common resource pool, Announcing UEs autonomously select the resources from the pool before transmission of discovery signaling. It is very likely that a resource is chosen by two or more Announcing UEs. This collision would degrade the D2D discovery performance. But for dedicated resource pool, it is contention free and thus provides better performance. It seems better to specify a rule for Announcing UEs to determine which pool to use. Otherwise, most UEs may request for dedicated resources, which would easily cause resource congestion.

3GPP R2-140692 recommends that idle mode UEs use the common resource pool and connected mode UEs use the dedicated resource pool. This is simple. But, it would be more attractive to operators to allocate the discovery resources based on the user subscription or the service for which the discovery is to be used by a UE so that operators could charge differently for different user subscriptions or services. This should also be quite fair from user's point of view because a better service deserves more money.

In general, there are two directions to realize the above concept:
a. UE based
   It is assumed that there exists subscription information in a UE, which indicates whether the UE is allowed to use dedicated resources. If it is allowed, the UE sends a message to the network (NW) for requesting the dedicated resources. Otherwise, the UE uses common resources for discovery transmission. In this situation, a Monitoring UE needs to monitor both resource pools.
b. NW based
   According to 3GPP S2-140520, an Announcing UE sends a Discovery Request to NW when it is triggered to announce. According to the invention, when receiving the Discovery Request from the UE, the NW could determine which resource pool should be used by this UE, e.g. based on the user subscription or the service for which the discovery is to be used by the UE. For instance, the NW may fetch the user subscription according to the UE identity included in the Discovery Request and may know the service according to ProSe Application ID included in the Discovery Request. According to the invention, the NW could then indicate the resource pool to the Announcing UE in a Discovery Response. For Monitoring UEs, the NW could similarly determine the resource pool based on the ProSe Application ID included in the Discovery Request. With the instruction received during the Discovery Request Procedure, each UE could know whether it needs to request dedicated discovery resource from the eNB.

Furthermore, it would be beneficial for the eNB to indicate in the system information if dedicated resources are available so that an Announcing UE could avoid sending a message to requesting dedicated resources. This not only can save UE power, but also can reduce signaling.

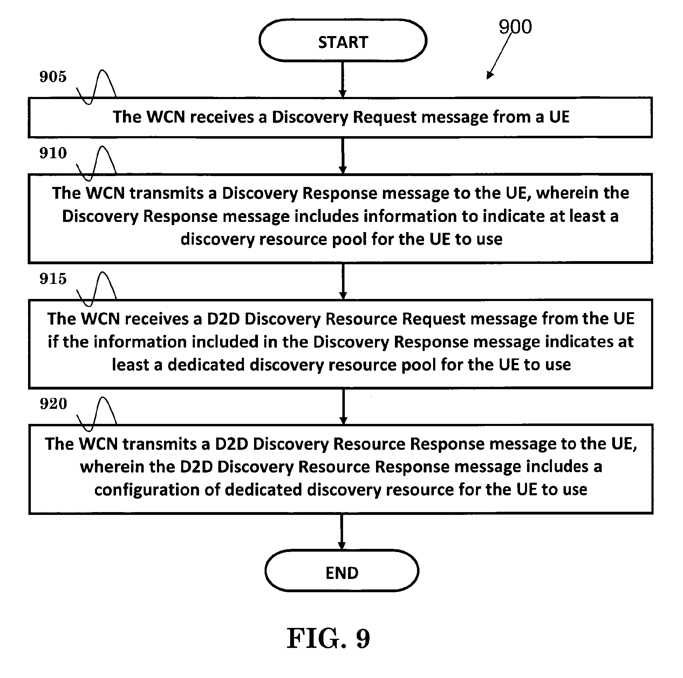

FIG. 9 is a flow chart 900 in accordance with one first exemplary embodiment according to the invention from the perspective of a wireless communication network (WCN). In step 905, the WCN receives a Discovery Request message from a user equipment (UE). Preferably, the Discovery Request message could include at least a ProSe Application ID or at least a part or a subset of a ProSe Application ID.

In step 910, the WCN transmits a Discovery Response message to the UE, wherein the Discovery Response message includes information to indicate at least a discovery resource pool for the UE to use. In addition, the Discovery Response message could include a ProSe Application Code and/or a discovery filter. Furthermore, the ProSe Application Code could be contained in a discovery signal transmitted "over the air" by the UE.

In step 915, the WCN receives a D2D Discovery Resource Request message from the UE if the information included in the Discovery Response message indicates at least a dedicated discovery resource pool for the UE to use. In step 920, the WCN transmits a D2D Discovery Resource Response message to the UE in response to reception of the D2D Discovery Resource Request message, wherein the D2D Discovery Resource Response message includes a configuration of dedicated discovery resource for the UE to use. Furthermore, the WCN indicates if dedicated discovery resources are available in a system information message.

Preferably, a configuration of the common discovery resource pool and/or a configuration of the dedicated discovery resource pool are included in a system information message. All preferred features of the first exemplary embodiment according to the invention can be combined.

Referring back to FIGS. 3 and 4, the device 300 includes a program code 312 stored in memory 310. The CPU 308 could execute program code 312 to enable the WCN (i) to receive a Discovery Request message from a UE, and (ii) to transmit a Discovery Response message to the UE, wherein the Discovery Response message includes information to indicate at least a discovery resource pool for the UE to use. In addition, the CPU 308 can execute the program code 312 to perform all of the above-described actions and steps or others described herein, in particular those of the first exemplary embodiment according to the invention described in paragraphs [0050] to [0053] above.

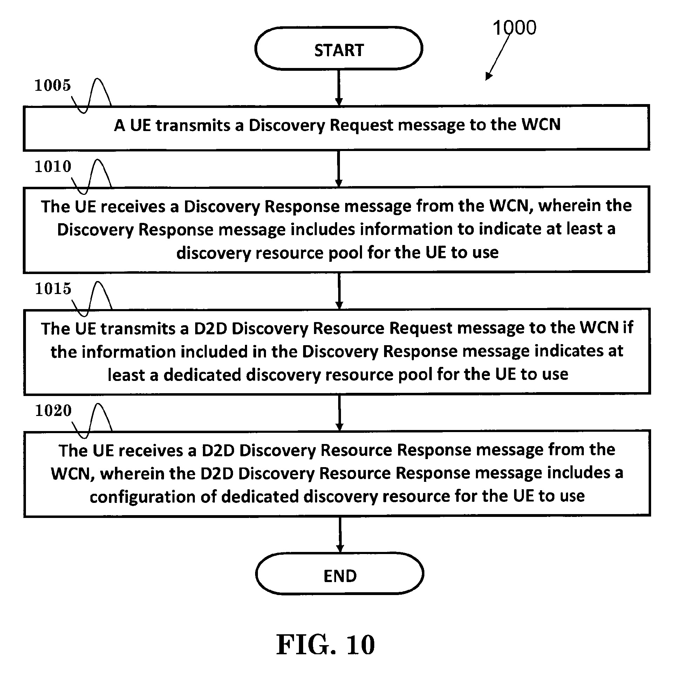

FIG. 10 is a flow chart 1000 in accordance with one second exemplary embodiment according to the invention from the perspective of a UE. In step 1005, the UE transmits a Discovery Request message to the WCN. Preferably, the Discovery Request message could include at least a ProSe Application ID or at least a part or a subset of a ProSe Application ID. Furthermore, the ProSe Application ID could be an identity used for direct discovery and for identifying a service.

In step 1010, the UE receives a Discovery Response message from the WCN, wherein the Discovery Response message includes information to indicate at least a discovery resource pool for the UE to use. In addition, the Discovery Response message could include a ProSe Application Code and/or a discovery filter. Furthermore, the ProSe Application Code could be contained in a discovery signal transmitted "over the air" by the UE.

In step 1015, the UE transmits a D2D Discovery Resource Request message to the WCN if the information included in the Discovery Response message indicates at least a dedicated discovery resource pool for the UE to use. Furthermore, the UE does not transmit the D2D Discovery Resource Request message to the WCN if a system information message indicates that dedicated discovery resources are not available. In step 1020, the UE receives a D2D Discovery Resource Response message from the WCN, wherein the D2D Discovery Resource Response message includes a configuration of dedicated discovery resource for the UE to use.

Preferably, a configuration of the common discovery resource pool and/or a configuration of the dedicated discovery resource pool are included in a system information message. Preferably, the UE would read the configuration of the common discovery resource pool if the information included in the Discovery Response message indicates at least a common discovery resource pool for the UE to use. Preferably, the UE would read the configuration of the dedicated discovery resource pool if the information included in the Discovery Response message indicates at least a dedicated discovery resource pool for the UE to use.

Preferably, the UE transmits discovery signals using the dedicated discovery resource based on the configuration. In addition, the UE could monitor discovery signals in the discovery resource pool(s) indicated in the Discovery Response message based on configuration(s) read from a system information message. Also, the UE could be triggered by an application in the UE to transmit the Discovery Request message. All preferred features of the second exemplary embodiment according to the invention can be combined.

Referring back to FIGS. 3 and 4, the device 300 includes a program code 312 stored in memory 310 of a UE. The CPU 308 could execute program code 312 to enable the UE (i) to transmit a Discovery Request message to the WCN, and (ii) to receive a Discovery Response message from the WCN, wherein the Discovery Response message includes information to indicate at least a discovery resource pool for the UE to use. In addition, the CPU 308 can execute the program code 312 to perform all of the above-described actions and steps or others described herein, in particular those of the first exemplary embodiment according to the invention described in paragraphs [0055] to [0059] above.

In addition, the CPU 308 can execute the program code 312 to perform all of the above-described actions and steps or others described herein.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for allocating discovery resource pools, wherein at least a common discovery resource pool and a dedicated discovery resource pool are supported for device-to-device, in the following also referred to as D2D, discovery in a wireless communication network, in the following also referred to as WCN, comprising:
the WCN receives a Discovery Request message from a user equipment, in the following also referred to as UE, (905); and
the WCN transmits a Discovery Response message to the UE, wherein the Discovery Response message includes information to indicate at least a discovery resource pool for the UE to use (910).

2. The method of claim 1, further comprising:
the WCN receives a D2D Discovery Resource Request message from the UE if the information indicates the dedicated discovery resource pool for the UE to use (915).

3. The method of claim 1 or 2, further comprising:
the WCN transmits a D2D Discovery Resource Response message to the UE, wherein the D2D Discovery Resource Response message includes a configuration of dedicated discovery resource for the UE to use (920).

4. The method of anyone of claims 1 to 3, further comprising:
the WCN indicates if dedicated discovery resources are available in a system information message.

5. A method for allocating discovery resource pools, wherein at least a common discovery resource pool and a dedicated discovery resource pool are supported for device-to-device, in the following also referred to as D2D, discovery in a wireless communication network, in the following also referred to as WCN, comprising:
a user equipment, in the following also referred to as UE, transmits a Discovery Request message to the WCN (1005); and
the UE receives a Discovery Response message from the WCN, wherein the Discovery Response message includes information to indicate at least a discovery resource pool for the UE to use (1010).

6. The method of claim 5, further comprising:
the UE reads a configuration of the common discovery resource pool if the information indicates the common discovery resource pool for the UE to use.

7. The method of claim 5 or 6, further comprising:
the UE reads from a system information message a configuration(s) of the discovery resource pool(s) indicated in the Discovery Response message.

8. The method of anyone of claims 5 to 7, further comprising:
the UE transmits a D2D Discovery Resource Request message to the WCN if the information indicates the dedicated discovery resource pool for the UE to use (1015).

9. The method of anyone of claims 5 to 8, further comprising:
the UE does not transmit the D2D Discovery Resource Request message to the WCN if a system information message indicates that dedicated discovery resources are not available.

10. The method of anyone of claims 5 to 9, further comprising:
the UE receives a D2D Discovery Resource Response message from the WCN, wherein the D2D Discovery Resource Response message includes a configuration of dedicated discovery resource for the UE to use (1020), and
the UE transmits discovery signals using the dedicated discovery resource based on the configuration.

11. The method of anyone of claims 5 to 10, further comprising:
the UE monitors discovery signals in the discovery resource pool(s) indicated in the Discovery Response message based on a configuration(s) read from a system information message.

12. The method of anyone of claims 1 to 11, wherein a configuration of the common discovery resource pool and a configuration of the dedicated discovery resource pool are included in a system information message.

13. The method of anyone of claims 1 to 12, wherein the Discovery Request message includes at least a ProSe Application ID or at least a part or a subset of a ProSe Application ID, wherein preferably the ProSe Application ID is an identity used for direct discovery and for identifying a service.

14. The method of anyone of claims 1 to 13, wherein the Discovery Response message further includes a ProSe Application Code and/or a discovery filter, wherein preferably the ProSe Application Code is contained in a discovery signal transmitted "over the air" by the UE.

15. A communication device (300) for allocating discovery resource pools, wherein at least a common discovery resource pool and a dedicated discovery resource pool are supported for device-to-device, in the following also referred to as D2D, discovery in a wireless communication network, in the following also referred to as WCN, the communication device (300) comprising:
a control circuit (306);
a processor (308) installed in the control circuit (306);
a memory (310) installed in the control circuit (306) and operatively coupled to the processor (310);
wherein the processor (310) is configured to execute a program code (312) stored in the memory (310) to enable the communication device (300) to perform the method steps as defined in anyone of the preceding claims.
